(19) Europäisches Patentamt
European Patent Office
Office européen des brevets

(11) **EP 3 803 047 B2**

(12) **NEW EUROPEAN PATENT SPECIFICATION**
After opposition procedure

(45) Date of publication and mention
of the opposition decision:
**10.06.2026   Bulletin 2026/24**

(45) Mention of the grant of the patent:
**02.08.2023   Bulletin 2023/31**

(21) Application number: **19814481.8**

(22) Date of filing: **05.06.2019**

(51) International Patent Classification (IPC):
**E21B 43/12** (2006.01)      **E21B 47/11** (2012.01)

(52) Cooperative Patent Classification (CPC):
**E21B 43/122; E21B 47/11**

(86) International application number:
**PCT/NO2019/000015**

(87) International publication number:
**WO 2019/235936 (12.12.2019 Gazette 2019/50)**

(54) **A METHOD FOR DETERMINING A PARAMETER OF A FLOW OF A PRODUCED FLUID IN A WELL**

VERFAHREN ZUR BESTIMMUNG EINES PARAMETERS EINER STRÖMUNG EINES ERZEUGTEN FLUIDS IN EINEM BOHRLOCH

PROCÉDÉ DE DÉTERMINATION D'UN PARAMÈTRE D'UN ÉCOULEMENT D'UN FLUIDE PRODUIT DANS UN PUITS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.06.2018   NO 20180785**

(43) Date of publication of application:
**14.04.2021   Bulletin 2021/15**

(60) Divisional application:
**23188477.6 / 4 242 420**
**25159865.2 / 4 534 795**

(73) Proprietor: **Scanwell Technology AS**
**4033 Stavanger (NO)**

(72) Inventor: **SHKORIN, Daniel Dima**
**4077 Hundvåg (NO)**

(74) Representative: **Håmsø Patentbyrå AS**
**P.O. Box 9**
**4068 Stavanger (NO)**

(56) References cited:
WO-A1-01/65056          WO-A1-2010/111475
WO-A1-2015/191026          WO-A1-2015/191026
WO-A1-2017/065863          WO-A1-2018/056990
WO-A1-2019/235936          RU-C2- 2 315 863

US-A- 4 267 885          US-A- 5 031 697
US-A- 5 031 697          US-A1- 2010 198 533
US-A1- 2014 209 384

• **Standard handbook of petroleum and natural gas engineering /[edited by] William C. Lyons, Ph.D., P.E.; Gary J. Plisga, B.S.; Michael D. Lorenz, B.S. Third edition. Amsterdam; Boston: Elsevier:GPP 2016**
• **Mitra "Principles of Artificial Lift" First edition, Allied Publishers Pvt. Limited, 21. März 2016**
• **Zemel "tracers in the oil field", First edition, Elsevier, 1995 1995**
• **Hernández "Fundamentals of Gas Lift Engineering", first edition, Elsevier, 2016**
• **Amendments Entry EP Phase**
• **Report About Visit 2015**
• **Proposal 2013**
• **Second Office Action NO**
• **Amendments NO Prosecution**
• **Response Patent Proprietor NO**
• **Presentation Seminar Bergen 2013**
• **Paper "Successful Application of CO2 Tracer Technology for Surveillance of Gas Lifted Wells" 2010**
• **ASTM E2029-99 (2004) 2004**

**Description**

Field of invention

The present invention relates to a method of improving a flow rate of produced fluid in a well, and apparatus for performing the method.

Background

In a wide range of contexts, it can be important to determine a parameter of a flow of a produced fluid in a well, e.g. to quantify a production rate from the well. For example, it can be important to quantify a flow rate in a well to investigate if the well is producing as expected, and to investigate effects of how changing a setting of a control unit may affect the production rate.

There exist flow meters that may be used to obtain a measurement of a flow rate of a fluid from a well. However, the flow meters are expensive, and the accuracy of the flow meters can often be poor. The flow meters may also require frequent replacement and/or maintenance to provide acceptable accuracy. Because of the disadvantages, many wells do not have a flow meter to quantify production rate.

Alternatively, to obtain a measurement of production rate from a well, the production line of the well can be connected to a test separator. This can be challenging: Some wells do not have test separators easily accessible. For some installations, it is necessary to acquire the services of a truck or a ship having a test separator and to connect said test separator to the well to be tested. Even when test separators are available on an installation site, and the test separator can easily be connected to the production line of a well, it may be inefficient to use the test separator. For example, if an operator wants to test the effect of a change of rate of injection of gas-lift gas into a well, it may take several days for the resulting rate of production to stabilize and to be obtainable from measurements by use of the test separator. In such cases, the production line of said well may occupy the test separator for a long time. This may be very problematic as test separator capacity can often be a limited resource. Furthermore, production from a well may be lost when the well is connected to the test separator.

International Patent Application Publication Number WO 2017/065863 A1 describes a method for evaluating annulus-tubing communication points in a production well having an annulus between a production string and a surrounding string(s) of casing, where a composition of production fluids produced from the well is determined, and one or more tracer materials are injected into the annulus of the well under pressure as part of a lift gas, where the tracer materials are detected upon being produced at the surface, determining injection points of the one or more tracer materials, and determining whether each of the injection points represents a gas lift valve along the production tubing.

An object of the invention is to remedy or to reduce at least one of the drawbacks of prior art.

Summary

According to a first aspect of the invention, there is provided a method of improving a flow rate of produced fluid in a well, as set out in claim 1 of the claims appended hereto.

The step of comparing the first parameter to the second parameter to determine an effect of changing the setting of the control unit may comprise the step of determining which of the first setting and the second setting that results in a best flow rate of produced fluid in the well. The method may comprise the step of choosing the setting resulting in the best production rate as a setting for the well, to improve the flow rate of produced fluid in the well.

When altering a setting of a control unit, it may not be clear in advance what effect the change of setting will have on the rate of production. Advantageously, with the method, it may not be necessary to route production to a test separator to determine the effect. By obtaining a first measurement of a tracer substance prior to changing said setting and a second measurement of tracer substance after changing said setting, it is possible to determine an effect of the change.

The measurement of the tracer substance in the produced fluid may be a measurement of the tracer substance in a produced gas. Wells may typically produce a mixture of gas and liquid, and it may be possible and advantageous for the measurement to be a measurement of a gas portion of the total produced fluid and to thereafter correlate the resulting determined parameter of and/or effect on the produced gas to a corresponding parameter of and/or effect on the produced liquid. The produced liquid may typically comprise oil. The correlation may be made as a gas/oil ratio (GOR) and a gas/liquid ratio (GLR) in the produced fluid may be known and substantially constant over a period of time. An increase or decrease to e.g. a production rate of a gas may therefore easily be used to determine a corresponding increase or decrease to a production rate of a liquid.

The step of obtaining a measurement of the tracer substance may include determining a concentration of the tracer in a flow of fluid at the second location.

The step of using the measurement of the tracer substance to determine the parameter of the flow may include dividing the known rate of injection by the determined concentration of the tracer substance in the flow at the second location.

The produced fluid at the second location may typically comprise a reservoir fluid from a fluid reservoir. The reservoir fluid may comprise a plurality of substances.

If the reservoir fluid does not comprise the tracer substance, a rate of flow of production fluid may be determined by using the following formula:

$$Q_{f2} = Q_{ti1} / c_{t2}$$

where:

$Q_{f2}$    is flow rate of a produced fluid in the second location;

$Q_{ti1}$    is flow rate of tracer injected in the first location; and

$c_{t2}$    is concentration of tracer in the second location.

$Q_{f2}$ may be a flow rate of a gas.

If $Q_{f2}$ is a flow rate of a gas, an approximate flow rate of oil, $Q_o$, may be found simply by dividing $Q_{f2}$ with the gas/oil ratio, GOR:

$$Q_o = Q_{f2} / GOR.$$

Likewise, an approximate flow rate of liquid, $Q_L$, may be found simply by dividing $Q_{f2}$ with the gas/liquid ratio, GLR:

$$Q_L = Q_{f2} / GLR.$$

The method may thus be used to determine a parameter of flow of liquid and/or oil, in addition to the parameter of the parameter of flow of gas. The method may be used to determine a flow rate of all phases of a multiphase flow.

The substance used as a tracer substance may be present in the reservoir fluid as one of the plurality of substances.

If the substance used as a tracer substance is present in the reservoir fluid, the reservoir liquid may be saturated with said tracer substance. In that case, the injected tracer substance may not become absorbed by a liquid of the reservoir fluid. Instead, the injected tracer may follow the fluid flow fully as a component of the gas of the produced fluid.

The step of determining a concentration of the tracer substance may comprise:

- determining a first concentration of tracer substance, the first concentration of tracer substance being the concentration of tracer substance in the reservoir fluid; and
- determining a second concentration of tracer substance, the second concentration of tracer substance being the concentration of tracer substance in the produced fluid including both the reservoir fluid and the injected tracer substance.

The step of using the measurement of the tracer substance to determine the parameter of the flow of the produced fluid may comprise using the first concentration of tracer substance and the second concentration of tracer substance.

If the reservoir fluid does comprise the tracer substance, a rate of flow of production fluid in the second location may be determined by using the following formula:

$$Q_{f2} = \frac{Q_{ti1} - Q_{ti1} * c_2}{\Delta c}$$

where:

$Q_{f2}$    is flow rate of fluid in the second location;

$Q_{ti}$    is flow rate of tracer injected in the first location;

$c_2$    is a the second determined concentration; and

$\Delta c$    is the difference in concentration from the first concentration, $c_1$, to the second

concentration, $c_2$:

$$\Delta c = c_2 - c_1$$

The tracer substance may be injected in a flow of fluid including a gas-lift gas.

A plurality of different settings of the control unit may be used. At least one measurement of the tracer substance at the second location may be obtained for each of the different settings by use of the means for obtaining the measurement. The plurality of measurements may be used to determine a best setting for improving the flow rate of the produced fluid from the well.

By trying a plurality of different settings, it is possible to determine a setting that is a best setting of the plurality of settings.

The method according to the first aspect of the invention may be applied to a plurality of wells sharing a source of gas-lift gas, to determine a best distribution of gas-lift gas to the wells for improving the flow rate of produced fluid from each well to obtain a best total production of fluid from the plurality of wells.

It is not uncommon for a plurality of gas-lift wells to share a source of gas-lift gas. The source of gas-lift gas may not have the capacity to sufficiently provide each well with the optimal amount of gas-lift gas for the well. It may then be advantageous to apply the method to a number or all of the gas-lift wells to determine a best distribution of gas-lift gas to achieve a best rate of total production from the wells.

The method may further comprise the step of determining a rate of injection of the tracer substance.

The step of determining the rate of injection of the tracer substance may comprise using a device for measuring an amount of flow of fluid and/or using a device for determining a concentration of a substance in a flow of fluid.

The device for measuring an amount of flow of fluid may be a flow meter. The device for determining a concentration of a substance in a flow of fluid may be a chromatograph or a spectrometer.

The method may further comprise the step of determining a rate of injection of injected gas-lift gas.

The step of determining the rate of injection of injected gas-lift gas may comprise using a device for measuring an amount of flow of fluid and/or using a device for determining a concentration of a substance in a flow of fluid.

To accurately quantify production from the reservoir, it may be necessary to determine a rate of injection of injected gas-lift gas. Some wells may have gas-injection lines comprising a flow meter that may give an accurate reading of said rate. Other wells may have a flow meter where the accuracy is not sufficient or not known or may not have a flow meter at all. It may then be necessary to connect a flow meter to said injection line, or to determine the rate of injection by use of other means.

The method may further comprise a step of determining a production rate of a fluid from a reservoir by subtracting a gas-lift gas injection rate from a determined production flow rate. The production rate of the fluid from the reservoir may be a production rate of a gas from the reservoir, and the determined production flow rate may be the production flow rate of a gas. The gas may be a gas in a multiphase flow.

The device for determining a concentration of a substance in a flow of fluid may be a spectrometer or a chromatograph. The step of determining the rate of injection may then comprise adding a known quantity of tracer substance and/or injecting a tracer substance at a known rate of injection into the injection line in a first position in the injection line, and then to use the device for determining a concentration of a substance in a flow of fluid to determine the concentration of the tracer substance at a second position in the injection line, where the second position is downstream of the first position.

According to a second aspect of the invention, there is provided apparatus as set out in claim 12 of the claims appended hereto, for performing the method according to the first aspect of the invention.

Said means may be configured to obtain measurements of concentration of the tracer substance. Said means may comprise a spectrometer or a chromatograph to measure the concentration of the tracer substance.

The apparatus may further comprise a container for containing the tracer substance. The container may be connected to the injection line for supplying the tracer substance into the injection line.

Furthermore, the apparatus may comprise a device for measuring an amount of flow of fluid and/or a device for determining a concentration of a substance in a flow of fluid, wherein the device or the devices may be arranged for determining a rate of fluid flowing through the injection line.

According to an example, which is not part of the claimed invention, there is also described herein a method for determining a parameter of a flow of a produced fluid in a well, the well comprising a production flow line and an injection line, the production flow line comprising a production bore of the well, the injection line being connected to the production flow line at a first location, and the well having a second location in the production flow line downstream of the first location, the method comprising the steps of: injecting a tracer substance from the injection line into the production flow line at the first location, wherein the tracer is injected at a known rate of injection; obtaining a measurement of the tracer substance in the produced fluid at the second location by use of a means for obtaining said measurement; and using the measurement of the tracer substance to determine the parameter of the flow of the produced fluid.

The parameter of the flow to be determined may be a parameter to quantify the flow, e.g. to quantify a rate of production. The example method advantageously may not require production to be routed to a test separator to determine the parameter of the flow. The parameter may be a flow rate of the flow of produced fluid. The means for obtaining said measurements may be means adapted to be connected to the production line with no need for diverting or stopping production.

A huge number of substances may be used as a tracer substance, including carbon dioxide, nitrogen, helium, argon, a radioactive material, or another substance.

Note that "a second location in the production line downstream of the first location" means a point in the production line away from the first location in the direction of the fluid flow in the production line. The fluid flow of produced fluid in the production line typically goes from an underground fluid reservoir towards a separator. Thus, first location may typically be closer to the reservoir than the second location, and the second location may typically be closer to the separator than the first location.

The first location may be a downhole location. The second location may be a topside location. "Downhole" refers to a position in a wellbore below the surface of a ground, whereas "topside" refers to a position above the surface.

A spectrometer or a chromatograph may be used as the means for obtaining said measurements. Other devices may be used as the means for obtaining said measurements. The means may be connected to the production line to determine which substances are present in the flow, and/or a concentration of present substances. It may primarily be of interest, for the execution of the method, to quantify and/or to find a concentration of the tracer substance in particular.

The measurement may be obtained continuously. Obtaining a continuous measurement may provide more and/or better information. A continuous measurement may e.g. provide a continuous flow pattern of the produced fluid over the duration of the continuous measurement.

When a rate of injection of tracer substance in the first location is known, and a concentration of the tracer substance in the second location is known, it may be possible to determine the total flow rate of fluid at the second location.

Description and drawings

In the following is described example embodiments with reference to the accompanying drawings, wherein:

Fig. 1      shows a schematic representation of an example apparatus for determining a parameter of a flow of a produced fluid from a well;

Fig. 2      shows a schematic representation of another example of the apparatus; and

Fig. 3      shows a schematic representation of another example of the apparatus.

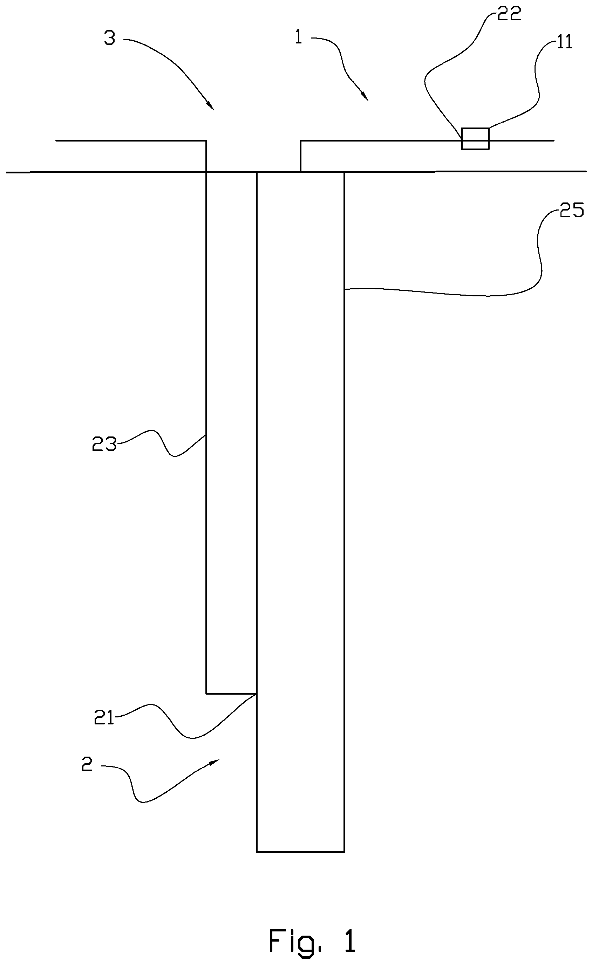

Figure 1 shows an apparatus 1 for determining a parameter of a flow of a produced fluid from a well 3. The well has a production flow line 2 comprising a production bore 25 and an injection line 23 connected to the production flow line 2 in a first location 21 of the production flow line 2. In a second location 22 of the production flow line 2, a spectrometer 11 for obtaining a measurement of a tracer substance is arranged to obtain a measurement of the tracer substance in a flow of fluid. The flow of fluid is a mixture of a reservoir fluid from a reservoir (not shown) and a fluid injected from the injection line into the production flow line in the first location 21. The direction of flow is from the reservoir, through the first location 21, towards and through the second location 22. Thus, the second location 22 can be said to be downstream of the first location 21.

A method for determining a parameter of a flow of a produced fluid in the well 3, using the apparatus 1, is performed as follows:
A tracer substance is injected into the production flow line 2 at the first location 21, the tracer substance being injected at a known rate of injection. The spectrometer 11 obtains a measurement of the tracer substance at the second location 22. More precisely, the spectrometer 11 obtains a measurement of a concentration of the tracer substance in the flow of fluid in the second location 22 of the production flow line 2. Then, the measurement of concentration of tracer substance is used to determine the parameter of the flow of the produced fluid. More precisely, the flow rate of produced fluid is determined.

When the flow rate of injected tracer substance in the first location 21, $Q_{ti1}$, is known, and the concentration of tracer substance in the second location 22, $c_{t2}$, is determined, the flow rate in the second location 22, $Q_{f2}$, can be determined by using the following formula:

$$Q_{f2} = {Q_{ti2}}/{c_{t2}} \ .$$

The produced fluid measurement of concentration of tracer substance in this embodiment is a concentration of tracer substance of a flow of gas in the flow of fluid. $Q_{f2}$, therefore, is a flow rate of the gas. The total produced fluid in the second location comprises both gas and oil, and the GOR is known. As the GOR is known and is substantially constant (for a period of time), the flow of oil can be determined by using the following formula:

$$Q_o = {Q_{f2}}/{GOR} \ .$$

The above-mentioned calculation can be used if the tracer substance is not present in the reservoir fluid. If the tracer substance is present in the reservoir fluid as one of a plurality of substances that makes out the fluid, it must be determined a concentration of the tracer substance in the reservoir fluid without the injected tracer substance, $c_1$, a concentration of the tracer substance in the produced fluid with injected tracer substance, $c_2$, and an increase in concentration, $\Delta c$, where $\Delta c = c_2 - c_1$.

The flow rate of gas in the second location 22 in the production flow line 2 may be determined using the following formula: $Q_{f2} = {Q_{ti2}}/{\Delta c}$ . The flow rate of oil may thereafter be determined as above.

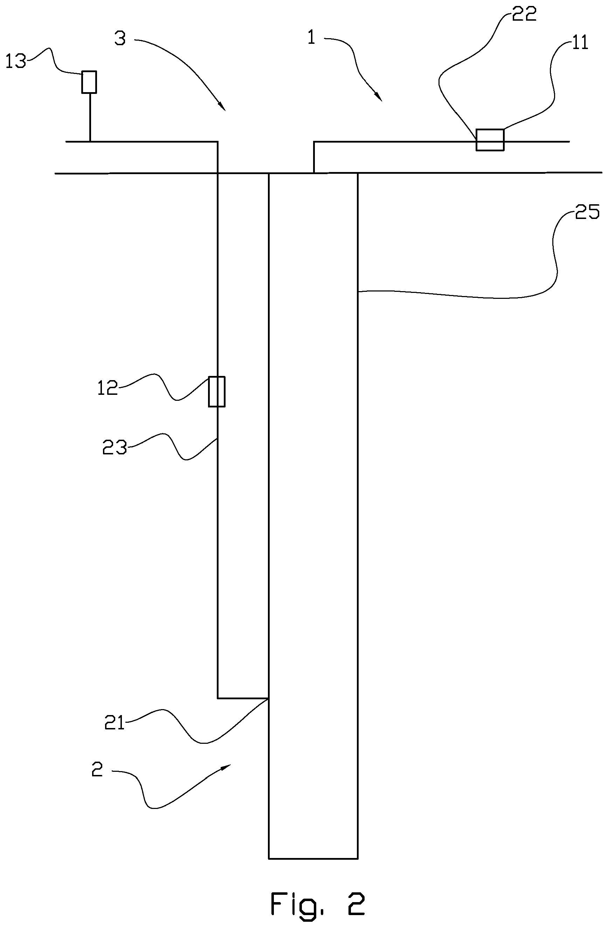

Figure 2 shows the apparatus in a second example, wherein the apparatus has all the same parts as in Figure 1 and additionally a device 13 for supplying tracer substance into the injection line connected to the injection line in a first position in the injection line and a spectrometer 12 connected to the injection line in a second position in the injection line. The second position is downstream of the first position in the injection line.

By use of the device 13, tracer substance is added to the fluid stream in the injection line at a known rate. The spectrometer 12 is used to determine a concentration of the tracer substance in the second position in the injection line.

By knowing the rate of supply of tracer substance in the first position in the injection line, $Q_t$, and determining the concentration of the tracer substance in the second position in the injection line, $c_t$, a rate of injection of gas from the injection line into the production flow line, $Q_{ig}$, can be determined:

$$Q_{ig} = {Q_t}/{c_t}.$$

It can be important to know the injection rate to accurately determine the production rate from a reservoir. When the production flow rate, $Q_{f2}$, is determined, and the injection rate, $Q_{ig}$, is determined, the production rate from the reservoir, $Q_r$, can be determined by subtracting the injection rate from the production flow rate:

$$Q_r = Q_{f2} - Q_{ig}.$$

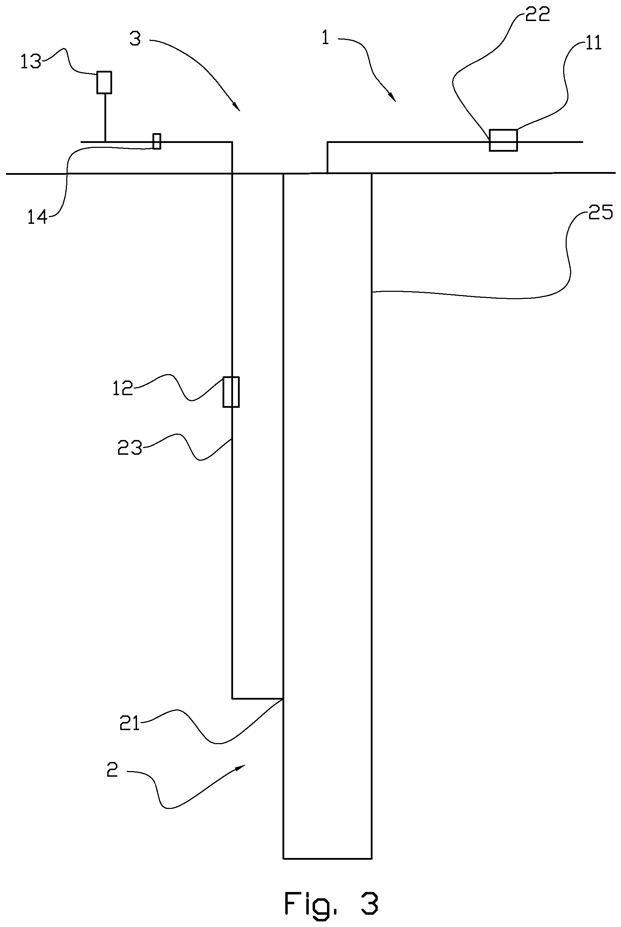

Figure 3 shows an example having a control unit 14 in the form of a choke valve 14 in the injection line 23 to adjust an injection rate of a gas-lift gas. The injection line 23 further has a spectrometer 12 for determining a concentration of an injected tracer substance placed downstream of a device 13 for supplying tracer substance into the injection line 23.

Furthermore, the example in Figure 3 has a spectrometer 11 in a second location 22 in the production flow line 2 downstream of a first location 21, where the injection line 23 connects to the production flow line 2. The first location 21 is downhole, whereas the second location is topside.

By use of the choke valve 14, it is possible to change the rate of injection of gas-lift gas into the well, and thus to affect a production flow rate in the production flow line 2. By use of the spectrometer 12 in the injection line 23, it is possible to accurately quantify the injection rate, and by use of the spectrometer 11 in the production flow line 2 it is possible to accurately quantify the production flow rate.

With the apparatus shown in Figure 3 it is possible to change an injection rate, determine the injection rate, affect the production flow rate, determine the production flow rate, and, through determining the injection rate and the resulting production flow rate for a plurality of different injection rates, to determine an injection rate that leads to a better production flow rate than other injection rates.

The example shown in Figure 3 is highly advantageous compared to prior art, as to find a resulting flow rate from a change of injection rate with no need for connecting the production flow line to a separator.

The example and method are particularly advantageous for an installation site having multiple wells sharing a limited, same source of gas-lift gas, to find a gas-lift gas distribution to the wells for good and/or improved and/or optimal total production from the wells.

It should be noted that the above-mentioned examples illustrate rather than limit the invention, and that those skilled in the art will be able to design many alternative embodiments without departing from the scope of the appended claims. For example, in place of a spectrometer 11, 12, another device may be used to obtain the measurement or measurements, e.g. a chromatograph. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

**Claims**

1. A method of improving a flow rate of produced fluid in a well (3), the well (3) comprising a production flow line (2) and an injection line (23), the production flow line (2) comprising a production bore (25) of the well (3), the injection line (23) being connected downhole to the production flow line (2) at a first, downhole location (21) and the well (3) having a second location (22) in the production flow line (2) downstream of the first location (21), gas-lift gas being injected into the production flow line at the downhole location (21) from the injection line, the well (3) comprising a control unit that may be adjusted to affect the flow rate of produced fluid from the well (3), wherein the control unit is a choke valve (14) for adjusting a rate of injection of the gas-lift gas, the method comprising the steps of:

> - injecting a tracer substance from the injection line (23) into the production flow line (2) at the first location (21), wherein the tracer is injected at a known rate of injection;
> - obtaining a first measurement of the tracer substance in the produced fluid at the second location (22) by use of a means (11) for obtaining said measurement while producing fluid using the first setting of the control unit;
> - using the first measurement of the tracer substance to determine a first parameter of the flow of the produced fluid;
> - adjusting the control unit to a second setting;
> - obtaining a second measurement of the tracer substance in the produced fluid at the second location (22) by use of the means (11) for obtaining said measurement while producing fluid using the second setting of the control unit;
> - using the second measurement of the tracer substance to determine a second parameter of the flow of the produced fluid; and
> - comparing the first parameter to the second parameter to determine an effect of changing the setting of the control unit.

2. The method according to claim 1, wherein the step of obtaining the first measurement of the tracer substance and the step of obtaining the second measurement of the tracer substance includes determining a concentration of the tracer in a flow of fluid at the second location (22).

3. The method according to claim 1 or 2, wherein the first measurement of the tracer substance and the second measurement of the tracer substance are obtained continuously over a period of time.

4. The method according to any one of the preceding claims, wherein:

> - the produced fluid at the second location (22) comprises a reservoir fluid from a fluid reservoir, the reservoir fluid comprising a plurality of substances; and

- the substance used as a tracer substance is present in the reservoir fluid as one of the plurality of substances.

5. The method according to claim 4, which further comprises:

- determining a first concentration of tracer substance, the first concentration of tracer substance being the concentration of tracer substance in the reservoir fluid; and
- determining a second concentration of tracer substance, the second concentration of tracer substance being the concentration of tracer substance in the produced fluid including both the reservoir fluid and the injected tracer substance.

6. The method according to any one of the preceding claims, wherein the tracer substance is injected in a flow of fluid including the gas-lift gas.

7. The method according to any one of the preceding claims, wherein:

- a plurality of different settings of the control unit is used;
- at least one measurement of the tracer substance at the second location (22) is obtained for each of the different settings by use of the means for obtaining the measurement;
- the plurality of measurements is used to determine a best setting for improving the flow rate of the produced fluid from the well (3).

8. The method according to any one of the preceding, applied to a plurality of wells sharing a source of gas-lift gas, to determine a best distribution of gas-lift gas to the wells for improving the flow rate of produced fluid from each well to obtain a best total production of fluid from the plurality of wells.

9. The method according to any one of the preceding claims, wherein the control unit adjusts the rate of injection of an injected fluid.

10. The method according to any one of the preceding claims, wherein the method comprises the step of determining a rate of injection of injected gas-lift gas.

11. The method according to any one of the preceding claims, used to determine a gas flow rate, a liquid flow rate and/or an oil flow rate of the production flow, wherein the production flow is a multiphase flow.

12. Apparatus (1) for performing the method according to claim 1, the apparatus (1) comprising:

- a production flow line (2) comprising a production bore (25);
- an injection line (23) to be connected downhole to the production flow line (2) at a first, downhole location (21) in the production flow line (2) for injecting gas-lift gas into the production flow line at the downhole location from the injection line;
- a control unit that may be adjusted to affect the flow rate of produced fluid from the well (3), wherein the control unit is a choke valve (14) for adjusting a rate of injection of gas-lift gas, the control unit being adjustable from a first setting to a second setting; and
- means (11) configured to:

obtain a first measurement of a tracer substance at a second location (22) in the production flow line (2) while, in use, producing fluid using the first setting of the control unit, and obtain a second measurement of the tracer substance at a second location (22) in the production flow line (2) while, in use, producing fluid using the second setting of the control unit, the second location (22) being downstream of the first location (21); use the first and second measurements of the tracer substance to determine first and second parameter of the flow of the produced fluid; and compare the first parameter to the second parameter to determine an effect of changing the setting of the control unit.

13. The apparatus (1) according to claim 12, further comprising a device for measuring an amount of flow of fluid, and/or a device (12) for determining a concentration of a substance in a flow of fluid, wherein the device or devices are arranged for determining a rate of fluid flowing through the injection line (23).

**Patentansprüche**

1. Verfahren zur Verbesserung einer Durchflussrate eines geförderten Fluids in einem Bohrloch (3), wobei das Bohrloch (3) eine Förderfliessleitung (2) und eine Injektionsleitung (23) aufweist, wobei die Förderfliessleitung (2) eine Förderbohrung (25) des Bohrlochs (3) aufweist, wobei die Injektionsleitung (23) lochabwärts an einer ersten Abwärtsstelle (21) mit der Förderfliessleitung (2) verbunden ist, und wobei das Bohrloch (3) stromabwärts von der ersten Stelle (21) eine zweite Stelle (22) in der Förderfliessleitung (2) aufweist, wobei Gasförder-Gas aus der Injektionsleitung an der Abwärtsstelle (21) in die Förderfliessleitung eingespritzt wird, wobei das Bohrloch (3) eine Steuereinheit aufweist, welche angepasst werden kann, um die Durchflussrate von gefördertem Fluid aus dem Bohrloch (3) zu beeinflussen, wobei die Steuereinheit ein Drosselventil (14) zur Anpassung einer Injektionsrate des Gasförder-Gases ist, wobei das Verfahren die folgenden Schritte beinhaltet:

- Einspritzen einer Indikatorsubstanz aus der Injektionsleitung (23) in die Förderfliessleitung (2) hinein an der ersten Stelle (21), wobei der Indikator mit einer bekannten Injektionsrate eingespritzt wird;
- Beschaffen einer ersten Messung der Indikatorsubstanz in dem geförderten Fluid an der zweiten Stelle (22) durch Verwendung eines Mittels (11) zum Beschaffen der besagten Messung während der Förderung des Fluids unter Anwendung der ersten Einstellung der Steuereinheit;
- Verwenden der ersten Messung der Indikatorsubstanz zur Ermittlung eines ersten Parameters des Durchflusses des geförderten Fluids;
- Anpassen der Steuereinheit zu einer zweiten Einstellung;
- Beschaffen einer zweiten Messung der Indikatorsubstanz in dem geförderten Fluid an der zweiten Stelle (22) unter Verwendung des Mittels (11) zum Beschaffen der besagten Messung während der Förderung des Fluids unter Anwendung der zweiten Einstellung der Steuereinheit;
- Verwenden der zweiten Messung der Indikatorsubstanz zur Ermittlung eines zweiten Parameters des Durchflusses des geförderten Fluids; und
- Vergleichen des ersten Parameters mit dem zweiten Parameter, um eine Wirkung der Änderung der Einstellung der Steuereinheit zu ermitteln.

2. Verfahren gemäss Anspruch 1, wobei der Schritt des Beschaffens der ersten Messung der Indikatorsubstanz und der Schritt des Beschaffens der zweiten Messung der Indikatorsubstanz ein Ermitteln einer Konzentration des Indikators in einem Fluidfluss an der zweiten Stelle (22) beinhaltet.

3. Verfahren gemäss Anspruch 1 oder 2, wobei die erste Messung der Indikatorsubstanz und die zweite Messung der Indikatorsubstanz kontinuierlich über eine Zeitperiode beschafft werden.

4. Verfahren gemäss einem der vorhergehenden Ansprüche, wobei:

- das geförderte Fluid an der zweiten Stelle (22) ein Speicherfluid aus einem Fluidspeicher enthält, wobei das Speicherfluid eine Vielzahl von Substanzen enthält; und

- die als Indikatorsubstanz verwendete Substanz als eine aus der Vielzahl von Substanzen im Speicherfluid vorhanden ist.

5. Verfahren gemäss Anspruch 4, ferner beinhaltend:

- Bestimmen einer ersten Konzentration von Indikatorsubstanz, wobei die erste Konzentration von Indikatorsubstanz die Konzentration von Indikatorsubstanz im Speicherfluid ist; und
- Bestimmen einer zweiten Konzentration von Indikatorsubstanz, wobei die zweite Konzentration von Indikatorsubstanz die Konzentration von Indikatorsubstanz im geförderten Fluid ist, einschliesslich sowohl des Speicherfluids als auch der eingespritzten Indikatorsubstanz.

6. Verfahren gemäss einem der vorhergehenden Ansprüche, wobei die Indikatorsubstanz in einen Fluidfluss einschliesslich des Gasförder-Gases eingespritzt wird.

7. Verfahren gemäss einem der vorhergehenden Ansprüche, wobei:

- eine Vielzahl von unterschiedlichen Einstellungen der Steuereinheit verwendet wird;
- mindestens eine Messung der Indikatorsubstanz an der zweiten Stelle (22) für jede der unterschiedlichen Einstellungen unter Verwendung der Mittel zur Beschaffung der Messung beschafft wird;
- die Vielzahl der Messungen verwendet wird, um eine beste Einstellung zur Verbesserung der Durchflussrate von gefördertem Fluid aus dem Bohrloch (3) zu ermitteln.

8. Verfahren gemäss einem der vorhergehenden, angewandt auf eine Vielzahl von Bohrlöchern, welche eine Quelle eines Gasförder-Gases miteinander teilen, zur Bestimmung einer besten Verteilung von Gasförder-Gas auf die Bohrlöcher, um die Durchflussrate von aus jedem Bohrloch gefördertem Fluid zu verbessern, um eine beste Gesamtförderung von Fluid aus der Vielzahl von Bohrlöchern zu ermitteln.

9. Verfahren gemäss einem der vorhergehenden Ansprüche, wobei die Steuereinheit die Injektionsrate eines eingespritzten Fluids anpasst.

10. Verfahren gemäss einem der vorhergehenden Ansprüche, wobei das Verfahren den Schritt beinhaltet, eine Injektionsrate von eingespritztem Gasförder-Gas zu bestimmen.

11. Verfahren gemäss einem der vorhergehenden Ansprüche, angewandt zur Bestimmung einer Gasdurchflussrate, einer Flüssigkeitsdurchflussrate und/oder einer Öldurchflussrate des Förderflusses, wobei der Förderfluss ein Mehrphasenfluss ist.

12. Vorrichtung (1) zur Ausführung des Verfahrens gemäss Anspruch 1, wobei die Vorrichtung (1) aufweist:

- eine Förderflussleitung (2) aufweisend eine Förderbohrung (25);
- eine Injektionsleitung (23), zur Verbindung lochabwärts mit der Förderflussleitung (2) an einer ersten Abwärtsstelle (21) in der Förderflussleitung, zur Injektion eines Gasförder-Gases aus der Injektionsleitung in die Förderflussleitung hinein an der Abwärtsstelle;
- eine Steuereinheit, welche angepasst werden kann, um die Durchflussrate von gefördertem Fluid aus dem Bohrloch (3) zu beeinflussen, wobei die Steuereinheit ein Drosselventil (14) zur Anpassung einer Injektionsrate von Gasförder-Gas ist, wobei die Steuereinheit anpassbar ist von einer ersten Einstellung zu einer zweiten Einstellung; und
- Mittel (11), ausgebildet um:

eine erste Messung einer Indikatorsubstanz an einer zweiten Stelle (22) in der Förderflussleitung (2) zu beschaffen; während, bei Betrieb, unter der Anwendung der ersten Einstellung der Steuereinheit Fluid gefördert wird, und eine zweite Messung der Indikatorsubstanz an einer zweiten Stelle (22) in der Förderflussleitung (2) zu beschaffen, während, bei Betrieb, unter Anwendung der zweiten Einstellung der Steuereinheit Fluid gefördert wird, wobei die zweite Stelle (22) sich stromabwärts von der ersten Stelle (21) befindet; die ersten und zweiten Messungen der Indikatorsubstanz zu verwenden, um den ersten und zweiten Parameter des Flusses des geförderten Fluids zu bestimmen; und um den ersten Parameter mit dem zweiten Parameter zu vergleichen, um eine Auswirkung der Änderung der Einstellung der Steuereinheit zu ermitteln.

13. Vorrichtung (1) gemäss Anspruch 12, ferner aufweisend eine Vorrichtung zur Messung einer Menge von Fluidfluss, und/oder eine Vorrichtung (12) zur Bestimmung einer Konzentration einer Substanz in einem Fluidfluss, wobei die Vorrichtung oder Vorrichtungen ausgebildet sind, um eine Rate eines durch die Injektionsleitung (23) fliessenden Fluids zu bestimmen.

**Revendications**

1. Procédé d'amélioration d'un écoulement de fluide produit dans un puits (3), le puits (3) comprenant une conduite (2) d'écoulement de production et une conduite d'injection (23), la conduite (2) d'écoulement de production comprenant un orifice de production (25) du puits (3), la conduite d'injection (23) étant reliée en fond de trou à la conduite (2) d'écoulement de production au niveau d'un premier emplacement en fond de trou (21) et le puits (3) présentant un deuxième emplacement (22) dans la conduite (2) d'écoulement de production en aval du premier emplacement (21), un gaz pour extraction au gaz étant injecté dans la conduite d'écoulement de production au niveau de l'emplacement en fond de trou (21) à partir de la conduite d'injection, le puits (3) comprenant une unité de commande qui peut être réglée pour affecter l'écoulement de fluide produit provenant du puits (3), dans lequel l'unité de commande est une soupape d'étranglement (14) pour régler un taux d'injection du gaz pour extraction au gaz, le procédé comprenant les étapes suivantes :

- l'injection d'une substance de type traceur à partir de la conduite d'injection (23) dans la conduite (2) d'écoulement de production au niveau du premier emplacement (21), dans lequel le traceur est injecté à un taux d'injection connu ;
- l'obtention d'une première mesure de la substance de type traceur dans le fluide produit au niveau du deuxième emplacement (22) en utilisant des moyens (11) permettant l'obtention de ladite mesure tout en produisant du fluide en utilisant le premier réglage de l'unité de commande ;
- l'utilisation de la première mesure de la substance de type traceur pour déterminer un premier paramètre de l'écoulement du fluide produit ;
- le réglage de l'unité de commande sur un deuxième réglage ;
- l'obtention d'une deuxième mesure de la substance de type traceur dans le fluide produit au niveau du deuxième emplacement (22) en utilisant les moyens (11) permettant l'obtention de ladite mesure tout en produisant du fluide en utilisant le deuxième réglage de l'unité de commande ;
- l'utilisation de la deuxième mesure de la substance de type traceur pour déterminer un deuxième paramètre de l'écoulement du fluide produit ; et
- la comparaison du premier paramètre au deuxième paramètre pour déterminer l'effet d'une modification du réglage de l'unité de commande.

**2.** Procédé selon la revendication 1, dans lequel l'étape d'obtention de la première mesure de la substance de type traceur et l'étape d'obtention de la deuxième mesure de la substance de type traceur incluent la détermination d'une concentration du traceur dans un écoulement de fluide au niveau du deuxième emplacement (22).

**3.** Procédé selon la revendication 1 ou la revendication 2, dans lequel la première mesure de la substance de type traceur et la deuxième mesure de la substance de type traceur sont obtenues en continu sur une période de temps.

**4.** Procédé selon l'une quelconque des revendications précédentes, dans lequel :

- le fluide produit au niveau du deuxième emplacement (22) comprend un fluide de réservoir provenant d'un réservoir de fluide, le fluide de réservoir comprenant une pluralité de substances ; et
- la substance utilisée comme substance de type traceur est présente dans le fluide de réservoir en tant que l'une de la pluralité de substances.

**5.** Procédé selon la revendication 4, qui comprend en outre :

- la détermination d'une première concentration de substance de type traceur, la première concentration de substance de type traceur étant la concentration de substance de type traceur dans le fluide de réservoir ; et
- la détermination d'une deuxième concentration de substance de type traceur, la deuxième concentration de substance de type traceur étant la concentration de substance de type traceur dans le fluide produit incluant à la fois le fluide de réservoir et la substance de type traceur injectée.

**6.** Procédé selon l'une quelconque des revendications précédentes, dans lequel la substance de type traceur est injectée dans un écoulement de fluide incluant le gaz pour extraction au gaz.

**7.** Procédé selon l'une quelconque des revendications précédentes, dans lequel :

- une pluralité de réglages différents pour l'unité de commande est utilisée ;
- au moins une mesure de la substance de type traceur au niveau du deuxième emplacement (22) est obtenue pour chacun des différents réglages en utilisant les moyens permettant l'obtention de la mesure ;
- la pluralité de mesures est utilisée pour déterminer un meilleur réglage pour améliorer l'écoulement du fluide produit provenant du puits (3).

**8.** Procédé selon l'une quelconque des revendications précédentes, appliqué à une pluralité de puits partageant une source de gaz pour extraction au gaz, pour déterminer une meilleure distribution de gaz pour extraction au gaz vers les puits pour améliorer l'écoulement de fluide produit provenant de chaque puits afin d'obtenir une meilleure production totale de fluide à partir de la pluralité de puits.

**9.** Procédé selon l'une quelconque des revendications précédentes, dans lequel l'unité de commande règle le taux d'injection d'un fluide injecté.

**10.** Procédé selon l'une quelconque des revendications précédentes, dans lequel le procédé comprend l'étape de détermination d'un taux d'injection de gaz pour extraction au gaz injecté.

**11.** Procédé selon l'une quelconque des revendications précédentes, utilisé pour déterminer un écoulement de gaz, un écoulement de liquide et/ou un écoulement d'huile de l'écoulement de production, dans lequel l'écoulement de production est un écoulement polyphasique.

**12.** Appareil (1) pour la réalisation du procédé selon la revendication 1, l'appareil (1) comprenant :

- une conduite (2) d'écoulement de production comprenant un orifice de production (25) ;
- une conduite d'injection (23) destinée à être reliée en fond de trou à la conduite (2) d'écoulement de production au niveau d'un premier emplacement en fond de trou (21) dans la conduite (2) d'écoulement de production pour injecter du gaz pour extraction au gaz dans la conduite d'écoulement de production au niveau de l'emplacement en fond de trou à partir de la conduite d'injection ;
- une unité de commande qui peut être réglée pour affecter l'écoulement de fluide produit provenant du puits (3), dans lequel l'unité de commande est une soupape d'étranglement (14) pour régler un taux d'injection de gaz pour extraction au gaz, l'unité de commande pouvant être réglée pour passer d'un premier réglage à un deuxième réglage ; et
- des moyens (11) configurés pour :

obtenir une première mesure d'une substance de type traceur au niveau d'un deuxième emplacement (22) dans la conduite (2) d'écoulement de production tout en réalisant, en fonctionnement, la production de fluide en utilisant le premier réglage de l'unité de commande, et obtenir une deuxième mesure de la substance de type traceur au niveau d'un deuxième emplacement (22) dans la conduite (2) d'écoulement de production tout en réalisant, en fonctionnement, la production de fluide en utilisant le deuxième réglage de l'unité de commande, le deuxième emplacement (22) étant en aval du premier emplacement (21) ;

utiliser les première et deuxième mesures de la substance de type traceur pour déterminer un premier et un deuxième paramètre de l'écoulement du fluide produit ; et comparer le premier paramètre au deuxième paramètre pour déterminer l'effet d'une modification du réglage de l'unité de commande.

13. Appareil (1) selon la revendication 12, comprenant en outre un dispositif pour mesurer une quantité d'écoulement de fluide, et/ou un dispositif (12) pour déterminer une concentration d'une substance dans un écoulement de fluide, dans lequel le dispositif ou les dispositifs sont agencés pour déterminer un écoulement de fluide s'écoulant dans la conduite d'injection (23).

Fig. 1

Fig. 2

Fig. 3

**EP 3 803 047 B2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017065863 A1